Europäisches Patentamt

European Patent Office

Office européen des brevets

(19)

(11) EP 0 964 390 A2

(12) EUROPÄISCHE PATENTANMELDUNG

(43) Veröffentlichungstag:
15.12.1999 Patentblatt 1999/50

(51) Int. Cl.$^6$: G10L 5/06

(21) Anmeldenummer: 99201614.7

(22) Anmeldetag: 21.05.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 30.05.1998 DE 19824354

(71) Anmelder:
• Philips Patentverwaltung GmbH
22335 Hamburg (DE)
Benannte Vertragsstaaten:
DE

• Koninklijke Philips Electronics N.V.
5621 BA  Eindhoven (NL)
Benannte Vertragsstaaten:
FR GB

(72) Erfinder: Dolfing, Jannes G.A.
Röntgenstrasse 24, 22335 Hamburg (DE)

(74) Vertreter: Gössmann, Klemens
Philips Patentverwaltung GmbH,
Röntgenstrasse 24
22335 Hamburg (DE)

(54) **Vorrichtung zur Verifizierung von Signalen**

(57)     Die Erfindung bezieht sich auf eine Vorrichtung zur Verifizierung von zeitabhängigen benutzerspezifischen Signalen mit

- Mitteln zur Erzeugung eines Satzes (O') von Merkmalsvektoren ($o_t'$), die zur näherungsweisen Beschreibung eines eingegebenen Signals dienen und vorgebbaren Abtastintervallen des Signals zugeordnet sind;
- Mitteln zur Bereitstellung eines HMM-Modells ($\lambda$) für das Signal;
- Mitteln zur Bestimmung eines Wahrscheinlichkeitswertes, der die Wahrscheinlichkeit für das Auftreten des Satzes (O') von Merkmalsvektoren ($o_t'$) gegeben das HMM-Modell ($\lambda$) beschreibt und
- einem Schwellwertentscheider zum Vergleich des Wahrscheinlichkeitswertes mit einem Schwellwert ($\tau$) und zur Entscheidung über die Verifikation des Signals.

Um eine Verbesserung bei der Verifizierungsfehlerrate zu erreichen und gleichzeitig möglichst kleine HMM-Modelle zu verwenden, wird vorgeschlagen, daß separat für jeden einzelnen Benutzer beim Training eines für diesen Benutzer spezifischen HMM-Modells eine automatische benutzerspezifische Bewertung der Relevanz von Merkmalsvektorkomponenten, zu deren Ermittlung nur Originalsignale des jeweiligen Benutzers verwendet werden mittels einer LDA-Transformation und eine automatische Selektion von als relevant bewerteten Merkmalen dieser Merkmalsvektoren vorgesehen ist.

FIG.4

EP 0 964 390 A2

**Beschreibung**

Die Erfindung betrifft eine Vorrichtung zur Verifizierung von zeitabhängigen benutzerspezifischen Signalen mit

- Mitteln zur Erzeugung eines Satzes von Merkmalsvektoren, die zur näherungsweisen Beschreibung eines eingegebenen Signals dienen und vorgebbaren Abtastintervallen des Signals zugeordnet sind;
- Mitteln zur Bereitstellung eines HMM-Modells für das Signal;
- Mitteln zur Bestimmung eines Wahrscheinlichkeitswertes, der die Wahrscheinlichkeit für das Auftreten des Satzes von Merkmalsvektoren gegeben das HMM-Modell beschreibt und
- einem Schwellwertentscheider zum Vergleich des Wahrscheinlichkeitswertes mit einem Schwellwert und zur Entscheidung über die Verifikation des Signals.

Bei der Verifizierung von zeitabhängigen benutzerspezifischen Signalen - insbesondere Unterschriften oder Sprachsignalen - wird überprüft, ob ein eingegebenes Signal tatsächlich von einem bestimmten Benutzer stammt oder eine Fälschung ist. Zeitabhängigkeit bedeutet hier, daß die Erzeugung der Signale durch den Benutzer in einem bestimmten Zeitraum erfolgt, wobei unterschiedlichen Zeitpunkten innerhalb des Zeitraums bestimmte unterschiedliche Signalanteile zugeordnet sind. Bevor eine Verifizierung erfolgen kann, muß zunächst in einer Trainingsphase ein Signalmodell gebildet werden, wobei sogenannte Hidden-Markov-Modelle (HMM-Modelle) zur Anwendung kommen. Nachdem das Training erfolgt ist, kann mit Hilfe der Vorrichtung eine Verifizierung eines Signals erfolgen. Dazu wird einerseits eine Benutzerkennung, z.B. ein Benutzername oder eine einem Benutzer zugeordnete Nummer, und andererseits das benutzerspezifische Signal eingegeben. Das eingegebene Signal wird in einen Satz von Merkmalsvektoren transformiert. Zur Bildung der Vektorkomponenten werden bei Unterschriften beispielsweise bei der Unterschriftsabgabe überstrichene Koordinaten und der mittels eines Eingabestiftes ausgeübte Druck ausgewertet. Anschließend wird ein Wahrscheinlichkeitswertswert gebildet, der die Wahrscheinlichkeit für das Auftreten des Satzes von Merkmalsvektoren für das dem Benutzer mir der Benutzerkennung zugeordnete HMM-Modell beschreibt. Bis zu einem vorgebbaren Schwellwert wird das eingegebene Signal als Originalsignal betrachtet, ansonsten als Fälschung.

Der Erfindung liegt nun die Aufgabe zugrunde, die eingangs genannte Vorrichtung so auszugestalten, daß eine Verbesserung bei der Verifizierungsfehlerrate erreicht und gleichzeitig möglichst kleine HMM-Modelle verwendet werden.

Die Aufgabe wird dadurch gelöst, daß separat für jeden einzelnen Benutzer beim Training eines für diesen Benutzer spezifischen HMM-Modells eine automatische benutzerspezifische Bewertung der Relevanz von Merkmalsvektorkomponenten, zu deren Ermittlung nur Originalsignale des jeweiligen Benutzers verwendet werden, mittels einer LDA-Transformation und eine automatische Selektion von als relevant bewerteten Merkmalen dieser Merkmalsvektoren vorgesehen ist.

Die sogenannte LDA-Transformation ("Linear Discriminant Analysis") ist eine bekannte Transformation, die beispielsweise in K. Fukunaga, "Introduction to Statistical Pattern Recognition", Second Edition, Academic Press, New York, 1990, Kapitel 10.2, beschrieben ist. Die mit ihrer Hilfe gebildeten transformierten Merkmalsvektoren haben Komponenten, die entsprechend ihrer Relevanz für die Charakterisierung des jeweiligen benutzerspezifischen Signals geordnet sind. Nun kann den jeweiligen Gegebenheiten angepaßt eine vorgebbare Anzahl Komponenten der Merkmalsvektoren selektiert werden, was zu Merkmalsvektoren mit reduzierter Dimension führt, mit denen die HMM-Modellbildung in der Trainingsphase durchgeführt wird. Es werden weder Fälschungen des benutzerspezifischen Signals noch benutzerspezifische Signale anderer Benutzer bei der Selektion berücksichtigt. Mit der Reduktion der Merkmalsvekroren durch die LDA-Transformation ist eine Reduktion des verwendeten HMM-Modells verbunden, was zu einem schnelleren Verifikationsvorgang und zu einer Verringerung des benötigten Speicherbedarfs führt. Der Begriff Wahrscheinlichkeitswert soll allgemein einen aus einer Wahrscheinlichkeit abgeleiteren Wert beschreiben, insbesondere den ursprünglichen Wert der Wahrscheinlichkeit oder einen logarithmierten Wert der Wahrscheinlichkeit.

Bevorzugt wird die Erfindung zur Online-Verifizierung eingesetzt, jedoch ist auch der Einsatz bei der Offline-Verifizierung möglich. Die benutzerspezifischen Signale sind beispielsweise Unterschriften oder Sprachsignale.

Ausführungsbeispiele der Erfindung werden im folgenden anhand der Zeichnungen näher erläutert. Es zeigen:

Fig. 1 ein Blockschaltbild der erfindungsgemäßen Verifizierungsvorrichtung,
Fig. 2 und 3 Ablaufdiagramme für zwei Möglichkeiten der Vorverarbeitung,
Fig. 4 ein Blockschaltbild für die sich an die Vorverarbeitung anschließende Verarbeitung,
Fig. 5 ein Blockschaltbild für das Training des verwendeten HMM-Modells und
Fig. 6 eine Prinzipzeichnung zum verwendeten HMM-Modell.

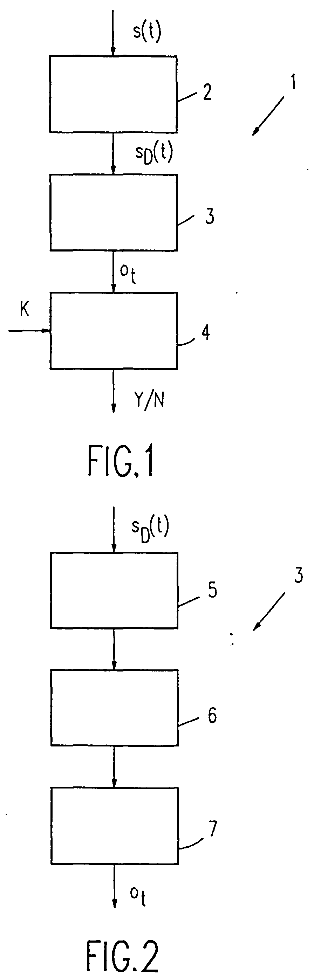

Die in Fig. 1 gezeigte Vorrichtung 1 zur Verifikation von zeitabhängigen benutzerspezifischen Signalen s(t) weist einen Funktionsblock 2 auf der die Signale s(t) in einen Strom von digitalierten Abtastwerten $s_D(t)$

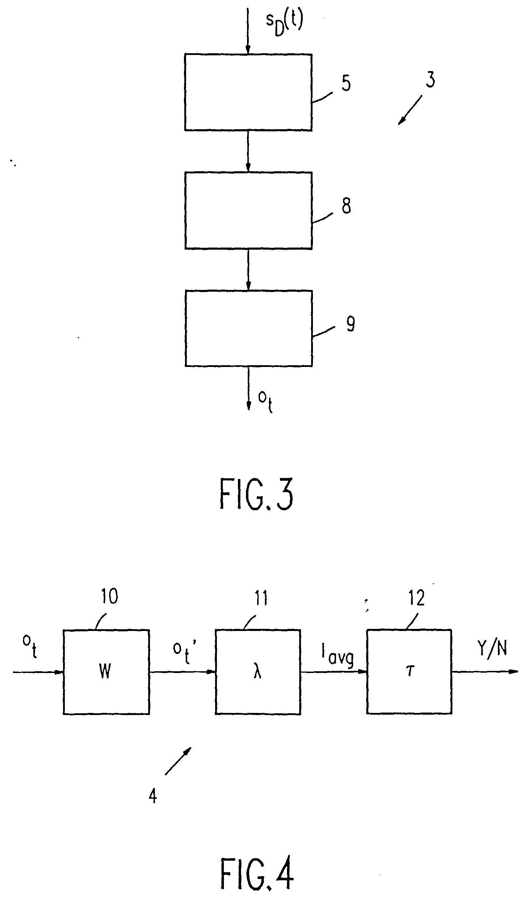

umwandelt. Insbesondere stellen die Signale s(t) Unterschriften dar, sie können aber auch beispielsweise Sprachsignale sein. Für eine Unterschriftsverifizierung läßt sich der Funktionsblock 2 beispielsweise mit Hilfe des Philips-Produkts PAID (Philips Advanced Interactive Display) realisieren, das im US-Patent 5,231,381 näher beschrieben ist. Bei diesem Produkt kann mit Hilfe eines speziellen Eingabestiftes eine Unterschrift eingegeben werden, wobei für die Unterschrift aufder Eingabefläche überstrichene Koordinaten (x- und y-Koordinaten), der bei Unterschriftabgabe über den Eingabestift aufdie Eingabefläche abgegebene Druck und die jeweilige Neigung des Eingabestiftes im Raum erfaßt werden. Die mittels des Eingabestiftes generierten analogen Eingabewerte werden in digitalisierte Abtastwerte $s_D(t)$ umgewandelt, die einer Vorverarbeitung unterzogen werden, die durch den Funktionsblock 3 dargestellt und später anhand der Figuren 2 und 3 noch näher beschrieben wird. Mittels der Vorverarbeitung werden Merkmalsvektoren $o_t$ generiert, die für bestimmte Abtastintervalle bzw. bestimmte Abtastzeitpunkte t in ihren Komponenten digitalierte Werte (Merkmale) enthalten, die aus den digitalisierten Abtastwerten $s_D(t)$ abgeleitet sind. Die Merkmalsvektoren $o_t$ werden nun entsprechend dem Funktionsblock 4 so weiterverarbeitet, daß als Ausgangswert eine Ja- oder Nein- Entscheidung Y oder N ausgegeben wird, die insbesondere als Binärwert 1 oder 0 ausgegeben wird. Dies wird später anhand von Fig. 4 erläutert. Dazu ist es erforderlich und vorgesehen, daß zusätzlich zur Eingabe des benutzerspezifischen Signals s(t) jeweils eine Benutzerkennung K eingegeben wird, z. B. durch Eingabe des betreffenden Benutzernamens oder einer dem jeweiligen Benutzer zugeordneten Nummer. Eine Ja-Entscheidung Y bedeutet, daß das eingegebene Signal s(t) als vom Benutzer mit der eingegebenen Benutzerkennung K stammendes Original identifiziert und verifiziert wurde. Eine Nein-Entscheidung N entspricht der Einordnung des eingegebenen Signals s(t) als Fälschung.

Fig. 2 erläutert eine mögliche Ausführungsform der durch den Funktionsblock 3 dargestellten Vorverarbeitung. Die digitalisierten Abtastwerte $s_D(t)$ werden einem Glättungsfilter 5 zugeführt. Anschließend werden die Abtastwerte $s_D(t)$ entsprechend dem Funktionsblock 6 in Rahmen zusammengefaßt, wobei die Rahmen entweder Zeitabschnitten mit vorgebbarer Länge oder räumlichen Strecken mit vorgebbarer Länge entsprechen. Anschließend wird für jeden Rahmen ein Merkmalsvektor $o_t$ gebildet (Funktionsblock 7). Dabei wird beispielsweise aus den verschiedenen Abtastwerten für jeden Rahmen ein einer bestimmten räumlichen Lage entsprechendes Koordinatenpaar mit einem bestimmten x-Wert und einem bestimmten y-Wert ermittelt, die aus den verschiedenen abgetasteten Koordinaten-werten durch Mittelwertbildung generiert werden. Entsprechend wird für jeden Rahmen auch ein Wert für den aufdie Eingabefläche abgegebenen Druck und ein Koordinatenpaar für die Neigung des Eingabestiftes im Raum ermittelt. Je nach Bedarf läßt sich die Menge von in einem Merkmalsvektor zusammengefaßten Merkmalen weiter erhöhen. Die Rahmen können sich überlappen oder auch ohne Überlappung aufeinanderfolgen.

Eine andere in Fig. 3 dargestellte Variante der Vorverarbeitung teilt das abgetastete Signal mit den Abtastwerten $s_D(t)$ nicht in Rahmen fester Länge, sondern in Segmente variabler Länge ein (entsprechend dem Funktionsblock 8). Die Segmentgrenzen werden insbesondere durch die Punkte festgelegt, an denen sich das Vorzeichen der Geschwindigkeit $v_x$ in Richtung der x-Koordinate oder das Vorzeichen der Geschwindigkeit $v_y$ in Richtung der y-Koordinate ändert. Die Geschwindigkeiten $v_x$ und $v_y$ erhält man durch Differenzieren der Funktion der detektierten x- bzw. y-Werte. Auch die so gebildeten Segmente können sich überlappen oder ohne Überlappung aufeinanderfolgen. Entsprechend der Verarbeitung mit Rahmen wird für jedes Segment ein Merkmalsvektor $o_t$ gebildet (Funktionsblock 9). Die Vorverarbeitung mit der Segmentierung wird bevorzugt verwendet.

Mit Hilfe der Vorverarbeitung wird ein Satz O von Merkmalsvektoren $o_t = o_1, ..., o_T$ erzeugt, der zur Beschreibung eines der Vorrichtung 1 zugeführten benutzerspezifischen Signals s(t) dient. Dabei gibt T die Anzahl Rahmen bzw. Segmente an, denen jeweils ein Merkmalsvektor $o_t$ zugeordnet ist. Jedem Rahmen bzw. Segment sind vorgebbare Abrastintervalle bzw. Abtastzeitpunkte zugeordnet.

Anhand von Fig. 4 wird nachstehend die Verarbeitung eines der Merkmalsvektoren $o_t$ zur Lieferung der Ja-Nein-Entscheidung Y/N beschrieben. Zunächst werden die mittels der Vorverarbeitung erzeugten Merkmalsvektoren $o_t$ einer LDA-Transformation ("Linear Discriminant Analysis") unterworfen. Diese Transformation ist z. B. in K. Fukunaga, "Introduction to Statistical Pattern Recognition", Second Edition, Academic Press, New York, 1990, Kapitel 10.1 und 10.2, beschrieben. Die Merkmalsvektoren $o_t$ der Dimension L werden dabei mit einer benutzerspezifischen Transformationsmatrix W der Dimension L x D multipliziert (Funktionsblock 10), so daß transformierte Merkmalsvektoren $o_t'$ der Dimension D entstehen (D ≤ L). Der so erzeugte Satz O' von Merkmalsvektoren $o_t'$ wird gemäß einem benutzerspezifischen HMM-Modell λ weiterverarbeitet (Funktionsblock 11). Die Struktur von HMM-Modellen läßt sich dem Buch von L.R Rabiner und B.H. Juang "Fundamentals of speech recognition", first edition, Prentice Hall, 1993, Kapitel 6.4 bis 6.6 entnehmen. Der Funktionsblock 11 liefert einen Wahrscheinlichkeitswert $I_{avg}$, der gemäß der Formel

$$I_{avg}(O',\lambda) = -\frac{1}{T}\sum_{t=1}^{T} \log b_{q_t}(o_t')$$

gebildet wird, mit $l_{avg}$ ($O',\lambda$) als zu ermittelndem Wahrscheinlichkeitswert für einen Satz $O'$ von Merkmalsvektoren $o_t'$ gegeben das HMM-Modell $\lambda$ für das benutzerspezifische Signal; t als Variable zur Kennzeichnung der Abtastintervalle, für die ein Merkmalsvektor $o_t'$ gebildet wird (t kennzeichnet die Rahmen bzw. Segmente); T als Gesamtzahl an Merkmalsvektoren $o_t'$; $q_t$ als Variable für einen beobachteten Zustand des HMM-Modells $\lambda$; $b_{qt}$ ($o_t'$) als Emissionswahrscheinlichkeitsdichte oder Emissionswahrscheinlichkeit für den Zustand $q_t$ des HMM-Modells $\lambda$ bei gegebenem Merkmalsvektor $o_t'$.

Der Wahrscheinlichkeitswert $l_{avg}$ wird somit durch Bildung eines Mittelwerts erzeugt, hier durch Bildung eines arithmetischen Mittelwerts.

Der Wahrscheinlichkeitswert $l_{avg}$ wird einem durch einen Funktionsblock 12 dargestellten Schwellwertentscheider zugeführt, der den Wert $l_{avg}$ mit einem Schwellwert $\tau$ vergleicht. Dieser Schwellwert wird entsprechend der Formel

$$\tau = l_{validate} + C$$

gebildet, wobei $l_{validate}$ ein automatisch bestimmter personenabhängiger Wahrscheinlichkeitswert ist. Um diesen Schwellwert für einen bestimmten Benutzer zu ermitteln, wird zunächst das HMM-Modell mit einer bestimmten Anzahl (z.B. 10) Originalsignale s(t) (den Trainingssignalen) dieses Benutzers trainiert. Das so ermittelte HMM-Modell wird später für den Betrieb der Verifizierungsvorrichtung 1 im Funktionsblock 11 verwendet. In Zusammenhang mit diesem Training wird auch die im Betrieb der Vorrichtung 1 verwendete LDA-Transformationsmatrix W bestimmt, was später noch erläutert wird. Dann werden in die so konditionierte Verifizierungsvorrichtung 1 nacheinander ein oder mehrere (z.B. 5) zusätzliche Originalsignale s(t) (die Validierungssignale) eingegeben. Für jedes Validierungssignal s(t) bestimmt die Vorrichtung 1 den Wahrscheinlichkeitswert $l_{avg}$. Anschließend werden die so ermittelten Wahrscheinlichkeitswerte $l_{avg}$ gemittelt, im vorliegenden Fall durch Bildung des arithmetischen Mittelwerts. Im vorliegenden Ausführungsbeispiel wird zur Bestimmung des Schwellwerts $\tau$ auf diesen noch eine empirisch zu ermittelnde und von den konkreten Rahmenbedingungen abhängige Konstante C aufaddiert, wodurch sich regelmäßig die erreichbare Fehlerrate der Verifizierungsvorrichtung 1 verbessert. Die Konstante C ist benutzerunabhängig. Das Aufaddieren einer Konstanten C ist allerdings nicht zwingend. Mit der Konstanten C läßt sich darüber hinaus das charakteristische Verifizierungsverhalten der Verifizierungsvorrichtung auf benutzerspezifischen Anforderungen einstellen. Man kann die Konstante C benutzen, um die sogenannte "equal error rate" (EE) zu finden und einzustellen und damit den Schwellwert, bei dem die Anzahl der falschen Verifizierungen und die Anzahl der falschen Einordnungen von benutzerspezifischen Signalen als Fälschungen gleich ist. Man könnte C auch so einstellen, daß die Anzahl der falschen Verifizierungen gleich Null ist und die Anzahl der falschen Einordnungen als Fälschungen gleich Null ist. Diese Einstellung ist insbesondere für den militärischen Bereich interessant, wenn man in bestimmten Bereichen einen unbefugten Zugang unter allen Umständen vermeiden will. Man könnte die Konstante C auch so einstellen, daß die Anzahl der falschen Einordnungen als Fälschungen gleich Null ist und die Anzahl der falschen Verifizierungen einen bestimmten Wert annimmt. Dies ist beispielsweise überall da sinnvoll, wo man Kunden nicht verärgern will, z.B. im bestimmten Arbeitsbereichen von Banken.

Abhängig davon, ob beim Betrieb der Vorrichtung 1 der für ein Signal s(t) ermittelte Wahrscheinlichkeitswert $l_{avg}$ oberhalb oder unterhalb des Schwellwerts $\tau$ liegt, liefert der vom Funktionsblock 12 durchgeführte Vergleich mit dem Schwellwert $\tau$ das Ergebnis, daß eine Fälschung bzw. daß ein Originalsignal vorliegt, was einer Nein- bzw. Ja-Entscheidung entspricht. Der vom Funktionsblock 12 ausgegebene Ausgangswert kann zusätzlich mit einer Information über den Abstand des Wahrscheinlichkeitswerts $l_{avg}$ von dem Schwellwert $\tau$ versehen werden, was bei einer Weiterverarbeitung ausgenutzt werden kann.

Mittels der LDA-Transformation werden die für die Signale s(t) gebildeten Merkmalsvektoren $o_t'$ dem verwendeten HMM-Modell $\lambda$ angepaßt, was zu einer verbesserten Fehlerrate bei der Verifizierung von benutzerabhängigen Signalen s(t) führt. Die Anpassung der Merkmalsvektoren $o_t'$ kann man sich dabei folgendermaßen vorstellen: die Merkmalsvektoren $o_t'$ sind in einem mehrdimensionalen Raum mit einem mehrdimensionalen Achsenkreuz aufgespannt, dessen Dimension der Anzahl Komponenten der Merkmalsvektoren $o_t'$ entspricht; die LDA-Transformation bewirkt einerseits eine geeignete Drehung des Achsenkreuzes und andererseits eine geeignete Stauchung oder Streckung der Achsen des Achsenkreuzes, so daß das Achsenkreuz besser an die Klassen der LDA-Transformation (die den Zuständen des HMM-Modells $\lambda$ entsprechen) angepaßt ist. Die mittels der LDA-Transformation modifizierten Merkmalsvektoren $o_t'$ haben Komponenten, die entsprechend ihrem Wert für die Charakterisierung des hier verarbeiteten personenabhängigen Signals s(t) geordnet und maximal kompakt sind. Dies kann benutzt werden, um bestimmte Merkmale der Merkmalsvektoren $o_t'$ in Abhängigkeit von ihrer Relevanz für die Charakterisierung des Signals s(t) und damit für dessen Verifizierung automatisch zu selektieren, insbesondere indem die Zeilen der LDA-Transformationsmatrix W mit den kleinsten Eigenwerten bei der LDA-Transformation unberücksichtigt bleiben und mithin eine in ihrer Dimension verkleinerte LDA-Transformationsmatrix W verwendet wird. Dies korrespondiert mit einem HMM-Modell $\lambda$, dessen Anzahl Parameter verkleinert ist, was schließlich zu einer Verringerung des Rechenaufwands im Betrieb der Vorrichtung 1 und zu einer Verminderung des erforderlichen Speicherplatzes verwendet werden kann.

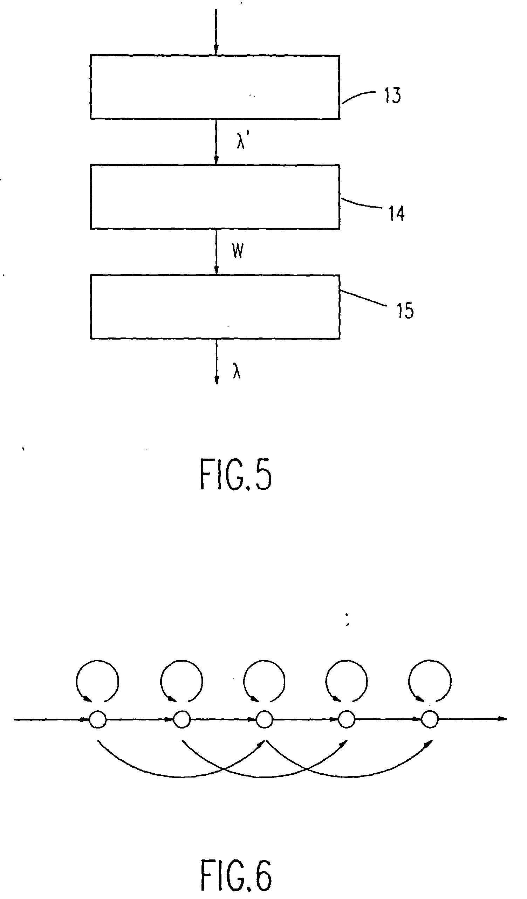

Anhand von Fig. 5 soll nun erläutert werden, wie im vorliegenden Fall das HMM-Modell $\lambda$ trainiert wird. Dieses ist personenspezifisch, d.h. für jeden Benutzer mit einer Benutzerkennung K wird ein solches HMM-Modell $\lambda$ gebildet und in der Vorrichtung 1 gespeichert. Das Training des HMM-Modells $\lambda$ erfolgt mit Hilfe einer bestimmten Anzahl Trainingssignalen, welche Originalsignale des betreffenden Benutzers sind. Beispielsweise werden 10 Originalsignale verwendet. Funktionsblock 13 stellt den ersten Trainingsdurchgang für das HMM-Modell $\lambda$ dar, was zu einem vorläufigen HMM-Modell $\lambda$' führt. Bei diesem Trainingsdurchgang werden die den Trainingssignalen entsprechenden Merkmalsvektoren $o_t$ direkt zur Modellbildung verwendet, d. h. es findet keine LDA-Transformation der Merkmalsvektoren $o_t$ statt. Das Training des HMM-Modells erfolgt anhand des Kriterium maximaler Wahrscheinlichkeit (sogenanntes "maximum likelihood criterion"), was näherungsweise durch eine Viterbi-Approximation durchgeführt wird. Hierzu wird auf Rabiner und B.H. Juang "Fundamentals of speech recognition" (a.a.O.) verwiesen. Nachdem ein vorläufiges HMM-Modell $\lambda$' gebildet worden ist, wird hieraus die LDA-Transformationsmarrix W berechnet (Funktionsblock 14). Bei der Ermittlung der Matrix W ist ein Eigenwertproblem zu lösen. Die Klassen der LDA-Transformation werden als Zustände des vorläufigen HMM-Modells $\lambda$' definiert. Bezüglich der Einzelheiten zur Bestimmung der Matrix W wird auf K. Fukunaga, "Introduction to Statistical Pattern Recognition" (a.a.O.) verwiesen. Danach wird mit den vorhandenen Trainingssignalen des Benutzers ein erneutes Training durchgeführt (Funktionsblock 15), wobei nun anstelle der Merkmalsvektoren $o_t$ transformierte Merkmalsvektoren $o_t' = W\,o_t$ zugrundegelegt gelegt werden.

Fig. 6 zeigt die Grundstruktur des HMM-Modells, daß im Funktionsblock 11 umgesetzt wird. Es wurde ein sogenanntes "left-to-right"-Modell (Bakis-Modell) verwendet. Die Zustände sind durch Kreise, Zustandsübergänge durch Pfeile angedeutet. Näheres hierzu ergibt sich aus L.Yang, B. Widjaja und R. Prasad, "Application of hidden Markov-models for signature verification", Pattern recognition 28, 161-170.

Die beschriebenen Funktionsblöcke werden beispielsweise mittels Software auf einem PC realisiert, an den eine geeignete Eingabeeinheit zur Eingabe und Digitalierung von benutzerspezifischen Signalen (für Unterschriften beispielsweise das oben genannte Philips-Gerät PAID) angeschlossen wird. Die Erfindung ist insbesondere auch zur Online-Verifizierung geeignet. Die Umwandlung eines Unterschriftsvorgangs kann auch mit Eingabestifren erfolgen, mit denen man eine Unterschrift auf Papier abgibt.

**Patentansprüche**

1. Vorrichtung zur Verifizierung von zeitabhängigen benutzerspezifischen Signalen mit

   - Mitteln zur Erzeugung eines Satzes (O') von Merkmalsvektoren ($o_t$'), die zur näherungsweisen Beschreibung eines eingegebenen Signals dienen und vorgebbaren Abtastintervallen des Signals zugeordnet sind;
   - Mitteln zur Bereitstellung eines HMM-Modells ($\lambda$) für das Signal;
   - Mitteln zur Bestimmung eines Wahrscheinlichkeitswertes, der die Wahrscheinlichkeit für das Auftreten des Satzes (O') von Merkmalsvektoren ($o_t$') gegeben das HMM-Modell ($\lambda$) beschreibt und
   - einem Schwellwertentscheider zum Vergleich des Wahrscheinlichkeitswertes mit einem Schwellwert ($\tau$) und zur Entscheidung über die Verifikation des Signals;

   dadurch gekennzeichnet,
   daß separat für jeden einzelnen Benutzer beim Training eines für diesen Benutzer spezifischen HMM-Modells eine automatische benutzerspezifische Bewertung der Relevanz von Merkmalsvektorkomponenten, zu deren Ermittlung nur Originalsignale des jeweiligen Benutzers verwendet werden, mittels einer LDA-Transformation und eine automatische Selektion von als relevant bewerteten Merkmalen dieser Merkmalsvektoren vorgesehen ist.

2. Vorrichtung nach Anspruch 1,
   dadurch gekennzeichnet,
   daß eine Online-Verifizierung vorgesehen ist.

3. Vorrichtung nach Anspruch 1 oder 2,
   dadurch gekennzeichnet,
   daß die benutzerspezifischen Signale Unterschriften sind.

4. Vorrichtung nach Anspruch 1 oder 2,
   dadurch gekennzeichnet,
   daß die benutzerspezifischen Signale Sprachsignale sind.

5. Verfahren zur Verifizierung von zeitabhängigen benutzerspezifischen Signalen, bei dem:

   - eine Eneugung eines Satzes (O') von Merkmalsvektoren ($o_t$'), die zur näherungsweisen Beschreibung eines eingegebenen Signals dienen und vorgebbaren Abtastintervallen des Signals zugeordnet sind, vorgesehen ist;
   - ein HMM-Modell ($\lambda$) für das Signal bereitgestellt wird;

- ein Wahrscheinlichkeitswert bestimmt wird, der die Wahrscheinlichkeit für das Auftreten des Satzes (O') von Merkmalsvektoren ($o_t'$) gegeben das HMM-Modell ($\lambda$) beschreibt;

- mittels eines Schwellwertentscheiders ein Vergleich des Wahrscheinlichkeitswertes mit einem Schwellwert ($\tau$) durchgeführt und eine Entscheidung über die Verifikation des Signals getroffen wird;

- eine automatische personenspezifische Bewertung der Relevanz der in den Merkmalsvektoren zusammengefaßten Merkmale mittels einer LDA-Transformation und eine automatische Selektion von als relevant bewerteten Merkmalen vorgesehen sind.

FIG.1

FIG.2

$s_D(t)$

FIG.3

FIG.4

$\lambda'$

W

$\lambda$

13

14

15

FIG.5

FIG.6